# EUROPÄISCHE PATENTSCHRIFT

(11) **EP 0 860 348 B1**
(45) Veröffentlichungstag und Bekanntmachung des Hinweises auf die Patenterteilung: **07.11.2001**
(21) Anmeldenummer: 98100335.3
(22) Anmeldetag: 10.01.1998
(51) Int. Cl.: B62D 25/04, B62D 29/00, F41H 7/04

(54) **Gepanzertes Kraftfahrzeug, dessen Karosserie wenigstens einen Hohlraum aufweist**
Armoured vehicle with a body comprising at least one cavity
Véhicule blindé, avec une carrosserie comportant au moins un espace creux

(30) Priorität: 25.02.1997 DE 19707462
(43) Veröffentlichungstag der Anmeldung: 26.08.1998
(73) Patentinhaber: Bayerische Motoren Werke Aktiengesellschaft, 80788 München (DE)
(72) Erfinder: Bauer, Walter, 85114 Buxheim (DE); Wühr, Manfred, 82223 Eichenau (DE); Karg, Dieter, 86558 Hohenwart/Thierham (DE)

(56) Entgegenhaltungen:
- WO-A-89/08678
- DE-A- 3 228 264
- US-A- 4 352 316
- US-A- 4 610 836
- "COMPOSITE BEAM" RESEARCH DISCLOSURE, Nr. 363, 1. Juli 1994, Seiten 339-400, XP000461343

## Beschreibung

Die Erfindung bezieht sich auf ein gepanzertes Kraftfahrzeug der im Oberbegriff des Patentanspruchs 1 genannten und als bekannt vorausgesetzten Art.

Bei diesem, aus der Praxis bekannten gepanzerten Kraftfahrzeug sind die beiden A-Säulen zur Erhöhung der ballistischen Schutzwirkung mit Kunststoff ausgegossen. Es hat sich jedoch herausgestellt, daß durch ein bloßes Ausgießen von Karosseriehohlräumen mit Kunststoff die ballistische Schutzwirkung des gepanzerten Kraftfahrzeugs nur geringfügig erhöht wird.

Ferner ist in der DE 196 01 982 C1 ein gepanzertes Kraftfahrzeug offenbart, in dessen A-Säulen jeweils zwei, im Abstand nebeneinander liegende, flexible Profile aus beschußhemmendem Material angeordnet sind. Nachdem jedoch die beiden beschußhemmenden Profile nur in einem kleinen Teilbereich des Querschnitts der A-Säulen vorgesehen sind, ist deren übriger Querschnittsbereich bei nicht vorhandener, fahrzeuginnenseitiger Schutzpanzerung nicht zusätzlich beschußhemmend geschützt.

Darüber hinaus geht aus der US 4,352,316 A (Figur 4) ein gepanzertes Kraftfahrzeug hervor, dessen beide B-Säulen ein V-förmiges Querschnittsprofil aufweisen. Dieses ist mit einer Anzahl von ballistischen Gewebeteilen ausgefüllt, die ihrerseits mit Kunststoff getränkt sind. Dies ist jedoch sehr arbeitsaufwendig und damit teuer.

Aufgabe der Erfindung ist es daher, bei einer sich im Hohlraum eines gepanzerten Kraftfahrzeugs befindenden Vergußmasse der im Oberbegriff des Patentanspruchs 1 genannten Art solche Mittel vorzusehen, daß die Vergußmasse eine hohe beschußhemmende Wirkung hat.

Zur Lösung der Aufgabe sind die im Patentanspruch 1 dargelegten Merkmale vorgesehen.

Durch die in der Vergußmasse erfindungsgemäß vorgesehenen, energieverzehrenden Körper und/oder ballistischen Gewebeteile hat die insbesondere aus Kunststoff oder auch aus Leichtmetall bestehende Vergußmasse vorteilhafterweise eine vergleichsweise wesentlich höhere ballistische Schutzwirkung und somit auch das gepanzerte Kraftfahrzeug im Bereich der die Vergußmasse aufweisenden Hohlräume eine hohe Beschußsicherheit. Dabei wird das Gewicht des gepanzerten Kraftfahrzeugs durch die Vergußmasse nur unwesentlich erhöht. Schließlich sind auch die energieverzehrenden Körper und die ballistischen Gewebeteile in einfacher Weise in der aushärtenden Vergußmasse vorzusehen.

Die energieverzehrenden Körper können kugel- oder polyederförmig gestaltet sein und aus Porzellan, Glas oder Keramik oder auch aus Leicht-, Schwer-, Hart- oder Nichteisenmetall sowie aus Sinter- und Kunststoff bestehen (Merkmale der Patentansprüche 2 und 3).

Zweckmäßigerweise wird die die energieverzehrenden Körper und/oder ballistischen Gewebeteile enthaltende Vergußmasse im Hohlraum der Tragsäulen, der Schweller oder des Dachrahmens eines gepanzerten Kraftfahrzeugs vorgesehen (Merkmale des Patentanspruchs 4).

Zwar ist aus der DE 15 78 324 A1 (Figur 1) eine leicht gebaute Panzerplatte mit einer Kunststoffmasse bekannt, in die energieabsorbierende Teile eingebettet sind. Hierbei handelt es sich jedoch um eine vorgefertigte Verbundpanzerplatte die an einem gegen Beschußeinwirkung zu sichemden Gegenstand außenseitig angebracht wird.

Ein Ausführungsbeispiel der Erfindung ist in der Zeichnung dargestellt und wird im folgenden erläutert. Es zeigt:
- Figur 1: eine Vorderansicht eines gepanzerten Kraftfahrzeugs,
- Figur 2: einen Schnitt längs der Linie II-II in Figur 1.

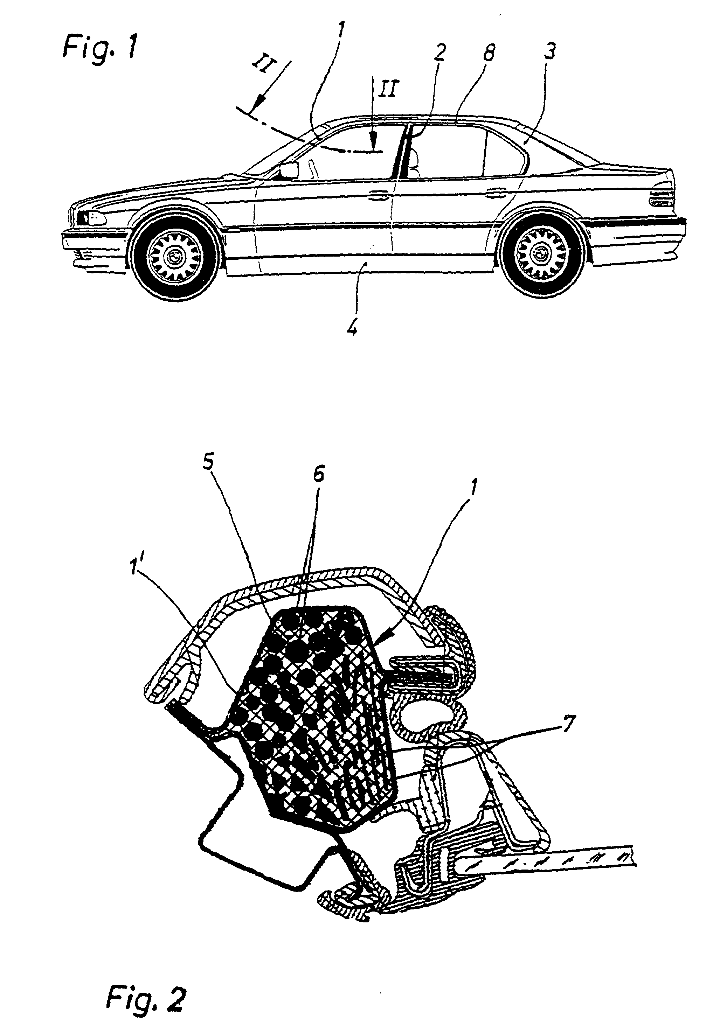

Das in Figur 1 dargestellte gepanzerte Kraftfahrzeug hat jeweils zwei A-, B- und C-Säulen 1, 2 und 3.

Wie Figur 2 zeigt, ist in den Hohlraum 1' der A-Säulen 1 eine aus Kunststoff bestehende Vergußmasse 5 eingebracht, die über die gesamte Höhenerstreckung der A-Säulen 1 verläuft. Dabei ist in die Vergußmasse 5 ihrerseits eine Vielzahl von regellos angeordneter, energieverzehrender Körper 6 sowie eine Anzahl von ballistischen Gewebeteilen 7 eingebettet. Diese bestehen aus einem Aramidgewebe oder dergleichen, während die energieverzehrenden Körper 6 aus Hart-, Leicht-, Schwer- oder Nichtmetall oder aus Sinter- oder Kunststoff oder aus Porzellan, Glas oder Keramik bestehen. Femer sind die energieverzehrenden Körper 6 kugel- oder polyederförmig gestaltet. Die mit den energieverzehrenden Körpern 6 und mit den ballistischen Gewebeteilen 7 versehene, aus Kunststoff bestehende Vergußmasse 5 wird zweckmäßgerweise über eine an der Oberseite der A-Säulen 1 vorgesehene Ausnehmung in den Hohlraum 1' der A-Säulen 1 eingegossen, in denen die Vergußmasse 5 nach einer gewissen Zeit aushärtet, so daß die energieverzehrenden Körper 6 und die ballistischen Gewebeteile 7, wie vorgesehen, in ihr eingebettet sind.

Die mit den energieverzehrenden Körpern 6 und/oder mit den ballistischen Gewebeteile 7 versehene Vergußmasse 5 kann natürlich auch in den Hohlraum der B-Säulen 2 und C-Säulen 3 und/oder in den Hohlraum der Schweller 4 oder des Dachrahmens 8 eingebracht werden.

Neben des erwähnten, unmittelbaren Eingießens der Vergußmasse 5 in den jeweiligen Hohlraum der Fahrzeugkarosserie kann auch eine die energieverzehrenden Körper 6 und/oder die ballistischen Gewebeteile 7 enthaltende Vergußmasse 5 in eine aus Kunststoff oder dergleichen bestehende Folie eingebracht, diese schlauchartig zusammengerollt und der so gebildete, schlauchförmige Füllkörper seinerseits über eine im Bereich der Stirnseite des jeweiligen Hohlkörpers vorgesehene Wandöffnung in diesen eingebracht werden. Darüber hinaus besteht auch die Möglichkeit, daß ein schlauchförmiger Füllkörper, dessen Kunststoffhülle lediglich die energieverzehrenden Körper 6 und/oder die ballistischen Gewebeteile 7 enthält, über eine Wandöffnung in den jeweiligen Karosseriehohlraum eingebracht wird, wobei schließlich an der Fahrzeugaußenseite über mehrere, im Abstand nebeneinander liegende Wandöffnungen die aushärtende Kunststoff-Vergußmasse 5 in den Füllkörper eingespritzt wird.

## Patentansprüche

1. Gepanzertes Kraftfahrzeug mit verstärkten Karosseriebauteilen, die Panzerungsmittel zum Sichern von schmalen, länglichen Hohlräumen gegen Durchschuß in den Fahrzeuginnenraum aufweisen, **dadurch gekennzeichnet, daß** in die Hohlräume (1') eine aushärtende Vergußmasse (5) eingebracht ist, in der eine Vielzahl regellos angeordneter, energieverzehrender Körper (6) und/oder ballistischer Gewebeteile (7) eingebettet sind.

2. Gepanzertes Kraftfahrzeug nach Anspruch 1, **dadurch gekennzeichnet, daß** die energieverzehrenden Körper (6) aus Hart-, Leicht-, Schwer- oder Nichteisenmetall, Sinter- oder Kunststoff, Porzellan, Glas oder Keramik bestehen.

3. Gepanzertes Kraftfahrzeug nach Anspruch 1, **dadurch gekennzeichnet, daß** die energieverzehrenden Körper (6) kugel- oder polyederförmig gestaltet sind.

4. Gepanzertes Kraftfahrzeug nach Anspruch 1, **dadurch gekennzeichnet, daß** die die energieverzehrenden Körper (6) und/oder ballistischen Gewebeteile (7) enthaltende Vergußmasse (5) im Hohlraum (1') mindestens einer Tragsäule (1), wenigstens eines Schwellers (4) und/oder des Dachrahmens (8) vorgesehen ist.

## Claims

1. An armoured vehicle with reinforced body components bearing armour for protecting narrow elongate cavities from shots penetrating into the vehicle interior, **characterised in that** a curable sealing compound (5) in which a number of random-oriented energy-consuming members (6) and/or ballistic fabric parts (7) are embedded is introduced into the cavities (1').

2. An armoured vehicle according to claim 1, **characterised in that** the energy-consuming members (6) are made of hard metal, light metal, heavy metal or non-ferrous metal, sintered material or plastics material, porcelain, glass or ceramic.

3. An armoured vehicle according to claim 1, **characterised in that** the energy-consuming members (6) are spherical or polyhedral.

4. An armoured vehicle according to claim 1, **characterised in that** the sealing compound (5) containing the energy-consuming members (6) and/or ballistic fabric parts (7) is provided in the cavity (1') in at least one supporting column (1), at least one sill (4) and/or the roof frame (8).

## Revendications

1. Véhicule blindé à éléments de carrosserie renforcés qui présentent des moyens de blindage pour garantir des volumes creux, étroits et allongés, contre une traversée en direction de l'habitacle,
**caractérisé en ce que**
dans les volumes creux (1') est introduite une masse coulée (5) durcissante dans laquelle sont noyés plusieurs corps absorbeurs d'énergie (6) disposés sans ordre, et/ou des parties (7) de tissu pare-balles.

2. Véhicule blindé selon la revendication 1,
**caractérisé en ce que**
les corps absorbeurs d'énergie (6) sont en métal dur, léger, lourd, ou non ferreux, en matière plastique ou frittée, en porcelaine, en verre ou en céramique.

3. Véhicule blindé selon la revendication 1,
**caractérisé en ce que**
les corps absorbeurs d'énergie (6) ont une forme sphérique ou polyédrique.

4. Véhicule blindé selon la revendication 1,
**caractérisé en ce que**
la masse coulée (5) contenant les corps absorbeurs d'énergie (6) et/ou les parties (7) de tissu pare-balles est prévue dans le volume creux (1') d'au moins un pied-droit (1), d'au moins un seuil (4) et/ou du cadre de toit (8).
